# EUROPEAN PATENT APPLICATION

(11) **EP 4 838 755 A2**
(43) Date of publication of application: **11.11.2026**
(21) Application number: 26200933.5
(22) Date of filing: 18.10.2023
(51) Int. Cl.: H02J 50/80

(54) **WIRELESS POWER TRANSFER**

(30) Priority: 11.11.2022 EP 22206952
(62) Document number(s) of the earlier application(s) in accordance with Art. 76 EPC: 23789677.4 / 4 616 513
(71) Applicant: Koninklijke Philips N.V., 5656 AE Eindhoven (NL)
(72) Inventor: LEBENS, Pascal Leonard Maria Theodoor, 5656AE Eindhoven (NL); AGAFONOV, Aleksei, Eindhoven (NL); DRAAK, Johannes Wilhelmus, Eindhoven (NL)
(74) Representative: Philips Intellectual Property & Standards

(57) **Abstract**

A power transmitter (101) wirelessly provides power to a power receiver (105) via a power transfer signal generated by a power transfer coil (103). A communication driver (209) generates a communication drive signal for a communication coil (207) to generate a communication carrier signal. A communication unit (205) communicate with the power receiver (105) using modulation of the communication carrier signal and receives a configuration message which comprises a response timing property indication indicative of a response timing property of a power supply signal resulting from power extraction from the communication carrier signal by the power receiver (105). A level controller (211) controls the amplitude of the communication carrier signal; and an adapter (213) adapts a control parameter of the level controller in dependence on the response timing property indication.

## Description

### FIELD OF THE INVENTION

The invention relates to operation of a wireless power transfer system arranged to wirelessly transfer power from a power transmitter to a power receiver.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply where power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered. An example of a wireless power transfer system is disclosed in CN107834713B.

Furthermore, such wireless power transfer arrangements may advantageously be designed such that the power transmitter device can be used with a range of power receiver devices. In particular, a wireless power transfer approach, known as the Qi Specifications, has been defined and is currently being developed further. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.5KW.

In many systems, such as specifically Qi systems, communication from the power receiver to the power transmitter may use load modulation where a load of the power transfer signal is varied in dependence on the data to be transmitted. However, such load modulation may be difficult to detect if the power transfer loading of the power transfer signal varies at the same time. Similarly, communication from the power transmitter to the power receiver may be achieved by modulating the power transfer signal (e.g. amplitude or frequency modulation) but interference to such modulation may be caused by variations in the parameters of the power transfer signal due to e.g. a varying load.

In some systems it has accordingly been proposed to use a completely separate communication approach. Specifically, Ki wireless power transfer systems may establish a two way communication link using the Near Field Communication, NFC, standard. The communication is during the power transfer phase performed in short time intervals in order to avoid or reduce interference between the power transfer and the communication. The power receiver is arranged to detect the NFC carrier to perform the communication during the short time intervals.

Examples of wireless power transfer systems that use a separate communication carrier are disclosed in EP3756266B1 and US2011/0285213A1.

During power transfer operation, the power receiver extracts power for a load from the power transfer signal. In many cases, the extraction of power is also used to power e.g. functionality of the power receiver itself, such as processing units, user interfaces etc. However, such an approach requires additional functionality and may not be optimal in all scenarios.

It has been proposed that power may be extracted from an NFC carrier in order to power low power consumption electronic circuitry. However, although such an approach may be useful in many scenarios, it tends to be suboptimal in some respects. For example, it tends to provide a suboptimal initialization and continuous supply of power that may not in all cases be ideal for the circuit being supplied. For example, in some scenarios, the provided power may vary and not be as stable as initially desired. In some scenarios, the provided power may not adapt, or adapt sufficiently fast and/or accurately to changes in the power transfer conditions and/or the power level being extracted.

Hence, an improved operation for a wireless power transfer system would be advantageous, in particular, an approach allowing increased flexibility, reduced cost, reduced complexity, improved communication, additional functionality, improved secondary power provision with e.g. improved power adaptation and/or control, and/or improved performance would be advantageous.

EP 3 756 266 B1 describes a wireless power transfer system equiped with communication that transfers power during a power transfer phase.

### SUMMARY OF THE INVENTION

Accordingly, the Invention seeks to preferably mitigate, alleviate or eliminate one or more of the above mentioned disadvantages singly or in any combination.

According to an aspect of the invention, the power transmitter for wirelessly providing power to a power receiver via an inductive power transfer signal, the power transmitter comprising: a power transfer coil arranged to generate the power transfer signal; a power transfer driver arranged to generate a power transfer drive signal for the power transfer coil, the power transfer driver being arranged to, during a power transfer phase, generate the power transfer drive signal; a communication coil arranged to generate a communication carrier signal; a communication driver arranged to generate a communication drive signal for the communication coil to generate the communication carrier signal; a communication unit arranged to communicate with the power receiver using modulation of the communication carrier signal; wherein the communication unit is arranged to receive a configuration message from the power receiver, the configuration message comprising a response timing property indication indicative of a response timing property for a power supply signal being extracted from the communication carrier signal by the power receiver, the response timing property being indicative of a speed of change in the power supply signal resulting from changes in the communication carrier signal; a level controller arranged to control an amplitude of the communication carrier signal; and an adapter arranged to adapt a control parameter for the control of the amplitude of the communication carrier signal by the level controller.

The invention may allow improved performance in many embodiments. It may allow an overall improved power transfer operation in many systems and embodiments.

The approach may provide an improved secondary/ auxiliary power transfer path that utilizes a communication path thereby providing a synergistic interoperability between communication and auxiliary power provision.

In many embodiments, the approach may allow reduced complexity of the power receiver and may in in many cases remove the need for the power receiver to include functionality for extracting power from the power transfer signal for internal power receiver circuitry.

An improved control and typically dynamic performance of the auxiliary power provision can often be achieved. The approach may for example allow an improved adaptation of the auxiliary power provision to changes in the power provision conditions and/or changes in the power being extracted and/or to changes in the preferred auxiliary power provision properties. In many embodiments and scenarios, an improved stability and accuracy of the power provision can be achieved. For example, a more accurate and/or stable and/or adaptive control of a supply voltage generated from power extraction from the communication carrier signal can be achieved.

The response timing property may be a property indicative of a timing of a change in the power supply signal in response to/ resulting from a change in power level/ amplitude of the communication carrier signal.

The control parameter may be a dynamic control parameter and may specifically be a dynamic response parameter. The control parameter may control a speed of response of the control of the amplitude of the communication carrier signal.

The level controller may control the amplitude of the communication carrier signal by controlling the amplitude of the communication drive signal.

The term "amplitude of the communication drive signal" may as appropriate be replaced by the term communication carrier signal strength.

The response timing property indication may be indicative of a rise time property for the power supply signal resulting from changes in the amplitude of the communication carrier signal.

The response timing property indication may be indicative of the response timing property relative to a nominal and/or predetermined response timing property value. The nominal and/or predetermined response timing property value may be used by the level controller unless a different response timing property value is indicated by a received response timing property indication.

Modulation of the communication carrier signal may be by load modulation of the carrier from the power receiver to the power transmitter and/or by amplitude modulation from the power transmitter to the power receiver. The communication may be NFC communication. The configuration message may be an NDEF message of an NFC communication.

The level controller may control the amplitude of the communication carrier signal by controlling communication driver to adapt/ change/ vary/ control the amplitude of the communication drive signal.

The power transfer driver may be arranged to, during the power transfer phase, generate the power transfer drive signal to employ a repeating time frame comprising at least a power transfer time interval and a communication time interval, the power transfer driver being arranged to generate the power transfer drive signal during the power transfer time intervals and to not generate the power transfer drive signal during communication time intervals.

The power transfer driver may be arranged to generate the power transfer drive signal, and thus the power transfer signal, to have a non-zero amplitude during the power transfer time intervals and to have a zero amplitude during communication time intervals.

In many embodiments, a duration of the communication time interval is no more than 5%, 10%, or 20% of the duration of the time frame. In many embodiments, the duration of the power transfer time interval(s) is no less than 70%, 80%, or 90% of the duration of the repeating time frame.

In accordance with an optional feature of the invention, the communication unit is arranged to receive power level messages from the power receiver; and wherein the level controller is arranged to form a power control loop with the power receiver by adjusting the amplitude of the communication carrier signal in response to the power level messages.

This may allow improved operation and/or facilitate implementation and/or operation in many embodiments.

The approach may allow a particularly advantageous operation and may typically allow a highly efficient power transfer via the communication carrier signal. An improved auxiliary power provision may typically be provided. The power level messages may be power control error messages.

In accordance with an optional feature of the invention, the control parameter is a loop parameter for the power control loop.

This may allow improved operation and/or facilitate implementation and/or operation in many embodiments.

The loop parameter may be a loop parameter influencing a dynamic behavior of the power control loop, such as a response time, a rise time, a frequency response, etc.

The loop parameter may be a filter response, a gain, an integration constant, a response time constant etc.

In accordance with an optional feature of the invention, the power transmitter further comprises a phase controller arranged to switch the power transmitter from a connected phase to the power transfer phase when initiating a power transfer; and wherein the power transfer driver is arranged to generate the power transfer signal when in the power transfer phase but not when in the connected phase and the communication driver is arranged to generate the communication carrier signal to be present during the connected phase; and wherein the level controller is arranged to adjust the amplitude of the communication carrier signal in response to the power level messages during the connected phase.

This may allow improved operation and/or facilitate implementation and/or operation in many embodiments. It may in particular in many scenarios allow a more accurate detection of timing gaps and thus may improve synchronization operation leading to improved performance.

In some embodiments, the power transmitter comprises a phase controller arranged to switch the power transmitter from a connected phase to the power transfer phase when initiating a power transfer; and wherein the power transfer driver is arranged to generate the power transfer signal when in the power transfer phase but not when in the connected phase and the communication driver is arranged to generate the communication carrier signal to be present during the connected phase; and wherein the level controller is arranged to adjust the amplitude of the communication carrier signal in response to the power level messages during the connected phase but not during the power transfer phase.

In some embodiments, the power transmitter comprises a phase controller arranged to switch the power transmitter from a connected phase to the power transfer phase when initiating a power transfer; and wherein the power transfer driver is arranged to generate the power transfer signal when in the power transfer phase but not when in the connected phase and the communication driver is arranged to generate the communication carrier signal to be present during the connected phase; and the level controller is arranged to form the power control loop during the connected phase but not during the power transfer phase.

In accordance with an optional feature of the invention, the level controller is arranged to set a power level of the communication carrier signal to a constant value for the power transfer phase.

This may allow improved operation and/or facilitate implementation and/or operation in many embodiments.

In some embodiments, the power control loop may be active during the connected phase but not during the power transfer phase.

In accordance with an optional feature of the invention, the response timing property indication is indicative of a step response timing property for the power supply signal.

This may allow improved operation and/or facilitate implementation and/or operation in many embodiments.

In accordance with an optional feature of the invention, the power transmitter further comprises a phase controller arranged to switch the power transmitter from a connected phase to the power transfer phase when initiating a power transfer; and the power transfer driver is arranged to generate the power transfer signal when in the power transfer phase but not when in the connected phase and the communication driver is arranged to generate the communication carrier signal to be present during the connected phase; and wherein the communication unit is arranged to receive the configuration message prior to switching to the power transfer phase.

This may allow improved operation and/or facilitate implementation and/or operation in many embodiments.

The configuration message may in some scenarios or embodiments be received during the connected phase.

The configuration message may in some scenarios or embodiments be received prior to the connected phase, such as during a configuration phase.

In some embodiments, the level controller is arranged to not adapt the power level control during the power transfer phase

In accordance with an optional feature of the invention, the communication unit is arranged to repeatedly transmit power level message requests to the power receiver; and wherein the adapter is arranged to adapt the power level control operation by adapting a frequency of transmission of the power level requests in response to the response timing property indication.

This may allow improved operation and/or facilitate implementation and/or operation in many embodiments.

In accordance with an optional feature of the invention, the communication unit is arranged to transmit a configuration request message to the power receiver, the configuration request message being a request for the power receiver to transmit the configuration message.

This may allow improved operation and/or facilitate implementation and/or operation in many embodiments.

In accordance with an optional feature of the invention, the configuration message is indicative of one predetermined response timing property indication out of a set of predetermined response timing property indications.

This may allow improved operation and/or facilitate implementation and/or operation in many embodiments. The approach may in particular allow a reduced complexity and facilitated implementation while still allowing improved performance.

According to an aspect of the invention there is provided power receiver for wirelessly receiving power from a power transmitter via an electromagnetic power transfer signal, the power receiver comprising: an inductive power extraction element arranged to extract power from the power transfer signal during a power transfer phase; a communication coil for receiving a received communication carrier signal; a communication unit arranged to communicate with the power transmitter using modulation of the communication carrier signal; a power extractor coupled to the communication coil and arranged to extract a power supply signal from the communication coil and to supply a circuit of the power receiver by the power supply signal; wherein the communication unit is further arranged to transmit a configuration message to the power transmitter, the configuration message comprising a response timing property indication indicative of a response timing property of the power supply signal, the response timing property being indicative of a speed of change in the power supply signal resulting from changes in the communication carrier signal.

This may allow improved operation and/or facilitate implementation and/or operation in many embodiments. It may in many scenarios allow a lower complexity and/or lower cost power receiver to be provided. In many scenarios, the approach may reduce or even avoid the requirement for circuitry to extract power from the power transfer signal for internal power receiver functions.

The power transfer signal may during a power transfer phase employ a repeating time frame comprising at least a power transfer time interval and a communication time interval, the power transfer signal being present during the power transfer time intervals and not present during communication time intervals.

In accordance with an optional feature of the invention, the power extractor is arranged to detect a change in power extracted from the power supply signal by the circuit; and the communication unit is arranged to transmit the configuration message in response to detecting the change in power extracted from the power supply signal.

According to an aspect of the invention there is provided a wireless power transfer system including a power transmitter and power receiver as described above.

In accordance with an optional feature of the invention, there is provided wireless power transfer system comprising a power transmitter and power receiver as described above.

This may allow improved operation and/or facilitate implementation and/or operation in many embodiments. The change may be a step change.

According to an aspect of the invention there is provided a method of operation for a power transmitter wirelessly providing power to a power receiver via an inductive power transfer signal, the method comprising: a power transfer coil generating the power transfer signal; generating a power transfer drive signal for the power transfer coil during a power transfer phase; a communication coil generating a communication carrier signal; generating a communication drive signal for the communication coil to generate the communication carrier signal; communicating with the power receiver using modulation of the communication carrier signal; receiving a configuration message from the power receiver, the configuration message comprising a response timing property indication indicative of a response timing property of a power supply signal being extracted from the communication carrier signal by the power receiver, the response timing property being indicative of a speed of change in the power supply signal resulting from changes in the communication carrier signal; controlling an amplitude of the communication carrier signal; and adapting a control parameter for the control of the amplitude of the communication carrier signal.

According to an aspect of the invention there is provided a method of operation for a power receiver wirelessly receiving power from a power transmitter via an electromagnetic power transfer signal, the power receiver comprising: an inductive power extraction element extracting power from the power transfer signal during power transfer time intervals of a power transfer phase; a communication coil receiving a received communication carrier signal; communicating with the power transmitter using modulation of the communication carrier signal; extracting a power supply signal from the communication coil; supplying a circuit of the power receiver by the power supply signal; and transmitting a configuration message to the power transmitter, the configuration message comprising a response timing property indication indicative of a response timing property of the power supply signal, the response timing property being indicative of a speed of change in the power supply signal resulting from changes in the communication carrier signal.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of elements of a power transfer system in accordance with some embodiments of the invention;
FIG. 2 illustrates an example of elements of a power transmitter in accordance with some embodiments of the invention;
FIG. 3 illustrates an example of elements of a power receiver in accordance with some embodiments of the invention;
FIG. 4 illustrates an example of a time frame for a wireless power transfer system in accordance with some embodiments of the invention;
FIG. 5 illustrates an example of a power transfer signal and a communication carrier signal in a wireless power transfer system;
FIG. 6 illustrates an example of elements of a power transfer path for a wireless power transfer operation;
FIG. 7 illustrates an example of a modulated communication carrier signal in a wireless power transfer system in accordance with some embodiments of the invention; and
FIG. 8 illustrates an example of a communication carrier signal and an extracted power supply signal in a wireless power transfer system in accordance with some embodiments of the invention.

### DETAILED DESCRIPTION OF THE EMBODIMENTS

The following description focuses on embodiments of the invention applicable to a wireless power transfer system utilizing a power transfer approach such as known from the Ki specification. However, it will be appreciated that the invention is not limited to this application but may be applied to many other wireless power transfer systems.

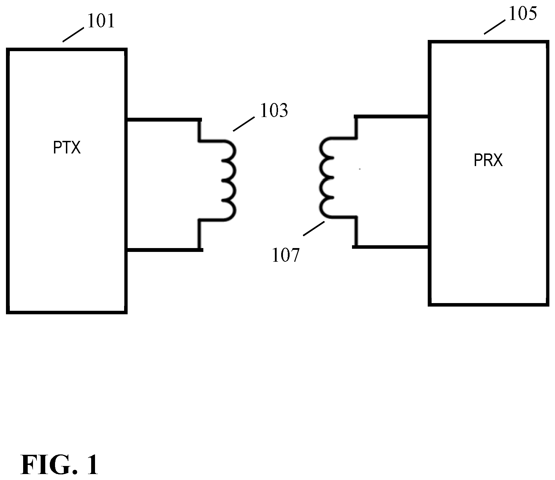

FIG. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may correspond to the electromagnetic power transfer component representing the energy transfer from the power transmitter to the power receiver, and may be considered to correspond to the component of the generated electromagnetic field that transfers power from the power transmitter to the power receiver. For example, if there is no loading of the receive coil 107, no power will be extracted by the power receiver from the generated electromagnetic field (apart from losses). In such a scenario, the driving of the transmitter coil 103 may generate an electromagnetic field of potentially high field strength but the power level of the power transfer signal will be zero (apart from losses). In some situations, where a foreign object is present, the power transfer signal may be considered to include a component corresponding to the power transfer to the foreign object, and thus the power transfer signal may be considered to correspond to the power being extracted from the electromagnetic field generated by the power transmitter.

The power transfer signal may typically have a frequency between around 20 kHz to around 500 kHz, and for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element. The power receiver may accordingly provide a load to the power transfer signal by comprising an inductive power extraction element which specifically may be a power extraction coil or an electrical (e.g. heating) element in which current is induced by the power transfer signal.

The system is arranged to transfer substantial power levels, and specifically the power transmitter may support power levels in excess of 50W, 100W, 500W, or 1 kW. For example, for Ki type applications, the power transfers may often be in excess of 100 W, and may be up to more than 2500W for very high power applications.

In the following, the operation of the power transmitter 101 and the power receiver 105 will be described with specific reference to an embodiment generally in accordance with the Specifications (except for the herein described (or consequential) modifications and enhancements) being developed by the Wireless Power Consortium. In particular, the power transmitter 101 and the power receiver 105 may follow, or substantially be compatible with, elements of the Ki Standards.

Many wireless power transfer systems, and in particular high power systems such as Ki, utilize resonant power transfer where the transmitter coil 103 is part of a resonance circuit and typically the receiver coil 107 is also part of a resonance circuit. In many embodiments, the resonance circuits may be series resonance circuits and thus the transmitter coil 103 and the receiver coil 107 may be coupled in series with a corresponding resonance capacitor. The use of resonance circuits tends to provide a more efficient power transfer.

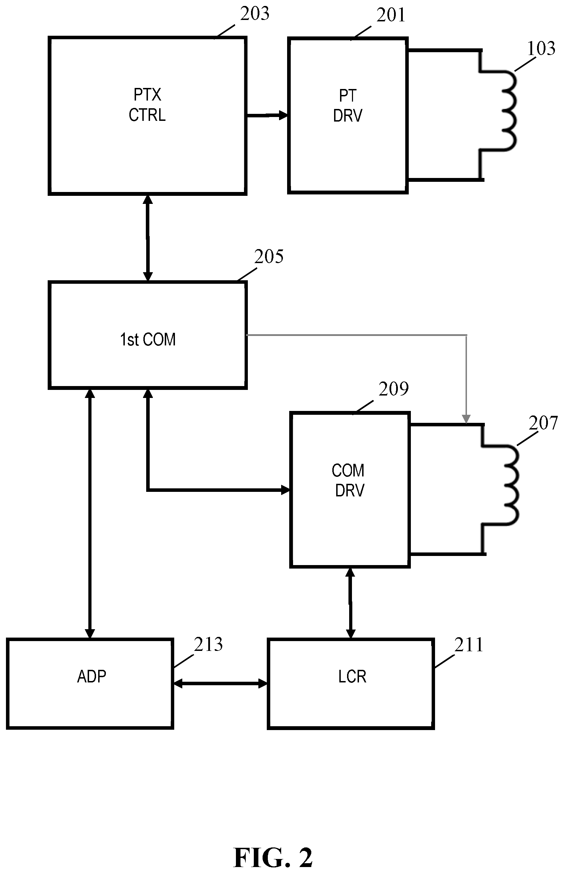

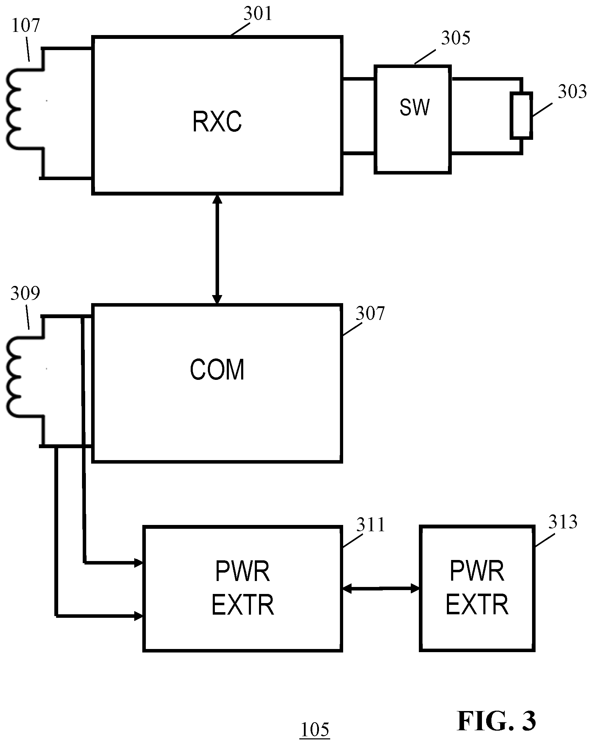

FIG. 2 illustrates elements of the power transmitter 101 and FIG. 3 illustrates elements of the power receiver 105 of FIG. 1 in more detail.

The power transmitter 101 includes a driver 201 which can generate a drive signal that is fed to the transmitter coil 103 which in return generates the electromagnetic power transfer signal, which provides a power transfer to the power receiver 105. The power transfer signal is provided (at least) during power transfer time intervals of the power transfer phase.

The driver 201 may typically comprise an output circuit in the form of an inverter, typically formed by driving a full or half bridge as will be well known to the skilled person.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi or Ki Specifications.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase.

In order to receive data and messages from the power receiver 105, the power transmitter 101 comprises a first communicator 205 which is arranged to receive data and messages from the power receiver 105 as well as transmit data and messages to the power receiver 105 (as will be appreciated by the skilled person, a data message may provide one or more bits of information).

In the approach, the communication is performed by modulation of a communication carrier signal that is generated by a first communication coil 207. The power transmitter specifically comprises a communication driver 209 which is coupled to the first communication coil 207. The communication driver 209 is arranged to generate a communication drive signal which is fed to the first communication coil 207 to generate the communication carrier signal. The communication driver 209 may typically be arranged to generate the communication drive signal/communication carrier signal to have a substantially different frequency than the power transfer drive signal/ power transfer signal. In many embodiments, the frequency of the communication carrier signal may be no less than 10, 100, or 500 times higher than the frequency of the power transfer signal. In many embodiments, the frequency of the communication drive signal/ communication carrier signal may have a frequency of no less than 500kHz, 1 MHz, or 10 MHz. Specifically for an NFC implementation, the communication carrier signal frequency may be 13.56 MHz.

The first communicator 205 is coupled to the communication driver 209 and is arranged to control this to modulate the communication drive signal/ communication carrier signal in order to transmit data to the power receiver (in the following references to the communication drive signal also include the implicit reference to the communication carrier signal as appropriate).

The modulation is in the specific example an amplitude modulation of the communication drive signal, and specifically a binary communication using Amplitude Shift Keying (ASK) is used. However, it will be appreciated that in other embodiments, the modulation may use other approaches, such as phase or frequency modulation of the communication drive signal.

In some embodiments, the first communicator 205 may for example receive data to be transmitted to the power receiver from the power transmitter controller 203 and in response generate a control modulation signal that is fed to the communication driver 209. The control modulation signal may for example be a binary signal that matches the data to be transmitted and the communication driver 209 may be arranged to generate the communication drive signal to have corresponding amplitude variations.

For communication from the power receiver to the power transmitter, the modulation of the communication drive signal may be a load modulation. The power receiver may be arranged to modulate the power transfer signal by varying a loading of the power transfer signal generated by the transmitter coil 103 in accordance with the data to be transmitted. The first communicator 205 may be arranged to sense variations in the voltage and/or current of the transmitter coil 103 and to demodulate the load modulation based on these. The skilled person will be aware of the principles of load modulation and therefore these will not be described in further detail.

In many embodiments, the communication may be in accordance with the Near Field Communication, NFC, Specifications and the power receiver may specifically include NFC functionality. In many embodiments, the first communicator 205, communication driver 209, and first communication coil 207 may implement (at least) the functionality of an NFC reader. Thus, in many embodiments, the communication drive signal/ communication carrier signal is a constant level (except for modulation) 13.56 MHz signal.

The following description will focus on examples where the communication between the power transmitter and power receiver is by NFC communication and specifically where modulation of the NFC carrier in the direction from the power transmitter to the power receiver is by Amplitude Shift Keying (ASK) and modulation of the NFC carrier in the direction from the power receiver to the power transmitter is by load modulation.

In the system of FIGs. 1-3, the communication is during the power transfer phase performed in communication time intervals. Specifically, the transmitter controller 203 may comprise/ implement a synchronizer which is arranged to synchronize the first communicator 205 such that the communication operation (typically both receiving and transmitting data) is performed in (and typically only in) the communication time intervals of the power transfer phase, i.e. in the time intervals that are assigned for communication.

This may substantially improve communication performance.

As will be described in more detail in the following, the approach utilizes a time division approach during the power transfer phase wherein operations, such as foreign object detection and communication, and power transfer may e.g. be performed in different time intervals thereby allowing the interference between these (specifically the impact of the power transfer on the foreign object detection/ communication) to be reduced substantially.

Specifically, for the wireless power transfer system, the power transfer signal is subject to a repeating time frame which comprises at least one power transfer time interval and one communication time interval.

The power transmitter may be arranged to switch off the power transfer signal during the communication time interval and the power receiver may in some embodiments be arranged to disconnect the load during the reduced power time interval.

The power transmitter (and typically the power receiver) may then arrange for one or more operations (functions, processes, procedures) to be performed during the communication time interval, i.e. it may synchronize the execution of one or more operations of the power transmitter to occur during the communication interval. For example, it may typically synchronize the performance of the foreign object detection and communication to occur during the communication time interval. In this way, it can be achieved that the impact of the power transfer and the power transfer signal on the given operation, specifically the foreign object detection and the communication, can be reduced and often minimized.

FIG. 3 illustrates some exemplary elements of the power receiver 105.

The receiver coil 107 is coupled to a power receiver controller 301 which couples the receiver coil 107 to a load 303 via a switch 305 (i.e. it is a switchable load). The power receiver controller 301 includes a power control path which converts the power extracted by the receiver coil 107 into a suitable supply for the load 303. In addition, the power receiver controller 301 may include various power receiver controller functionality required to perform power transfer, and in particular functions required to perform power transfer in accordance with the Qi or Ki Specifications.

In order to support communication from the power receiver 105 to the power transmitter 101 the power receiver 105 comprises a second communicator 307 and a second communication coil 309. The second communication coil 309 is arranged to couple to the first communication coil 207 and thus the communication carrier signal induces a current (at least an emf) in the second communication coil 309.

The second communicator 307 is coupled to the second communication coil 309 and is arranged to determine amplitude variations in the induced signal and to demodulate amplitude modulations of the communication carrier signal. Thus, the second communicator 307 is arranged to decode data transmitted from the power transmitter by amplitude modulation of the communication carrier signal. It will be appreciated that in other embodiments, the second communicator 307 may be arranged to decode data modulated onto the communication carrier signal using other modulation formats such as frequency or phase modulation.

The second communicator 307 is further arranged to load modulate the communication carrier signal in order to transmit data from the power receiver to the power transmitter. Specifically, the second communicator 307 may comprise a load (such as a capacitor) which depending on the data to transmit can be switched between being coupled to the second communication coil 309 and not being coupled to the second communication coil 309. These load modulations may then be detected by the first communicator 205 of the power transmitter.

In the specific example, the second communication coil 309 and the second communicator 307 may provide NFC compatible communication operation. Specifically, the second communication coil 309 may be arranged to provide functionality corresponding to an NFC tag and to decode data that has been ASK modulated onto the communication carrier signal in accordance with the NFC specifications.

Thus, the second communicator 307 is arranged to transmit data to the power transmitter by varying the loading of the receiver coil 107 in response to data to be transmitted to the power transmitter 101. The load variations are then detected and demodulated by the power transmitter 101 as will be known to the person skilled in the art.

In the example, the second communicator 307 is furthermore arranged to demodulate amplitude, frequency, and/or phase modulation of the communication carrier signal in order to retrieve data transmitted from the power transmitter.

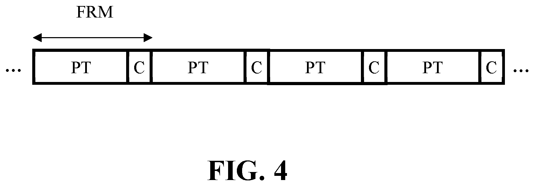

The system applies a repeating time frame during the power transfer phase where the time frame comprises at least one power transfer time interval and at least one communication time interval. An example of such a repeating time frame is illustrated in FIG. 4 where power transfer time intervals are indicated by PT and communication time intervals are indicated by C. In the example, each time frame FRM comprises only one communication time interval and one power transfer time interval. However, it will be appreciated that in other embodiments, other time intervals may also be included in a time frame or a plurality of communication time intervals and/or power transfer time intervals may be included in each time frame.

The power transfer driver 201 is controlled by the power transmitter controller 203 to only generate a drive signal during the power transfer time intervals and not during the communication time intervals. Thus, the driver generates the drive signal and thus the power transfer signal during the power transfer time intervals, whereas the drive signal and thus the power transfer signal is switched off during the communication time intervals.

In the power transfer phase, the power transmitter is thus arranged to perform power transfer during the power transfer time interval of the time frames of the power transfer phase. Specifically, during these time intervals, the power transmitter and the power receiver may operate a power control loop (the power control loop may be based on communication within communication time intervals corresponding to repeating time intervals). Thus, the level of the power being transferred may be dynamically varied.

In the communication time intervals of the time frames of the power transfer phase, the power drive signal is however switched off and thus no power transfer signal is generated during the communication time intervals.

The communication between the power transmitter and the power receiver is during the power transfer phase performed in the communication time intervals, and typically is only performed in the communication time intervals. The communication via the first communication coil 207 and the second communication coil 309 is only performed in the communication time intervals and specifically the modulation of the communication carrier signal occurs only in the communication time intervals.

In the system, the first communicator 205 is accordingly arranged to only transmit data, and thus to only (e.g. amplitude) modulate the communication carrier signal, during the communication time intervals. Likewise, it will typically only seek to demodulate data during the communication time intervals.

Similarly, the second communicator 307 is arranged to only communicate during communication time intervals when in the power transfer phase. In the system, the second communicator 307 is accordingly arranged to only transmit data, and thus to only load modulate the communication carrier signal, during the communication time intervals. Likewise, it will typically only seek to demodulate data during the communication time intervals.

Thus, during the power transfer phase, the first communicator 205 and the second communicator 307 are arranged to only communicate during the communication time intervals. Such an approach may provide highly advantageous performance and in particular has been found to provide much improved communication performance. In particular, the approach reduces interference to the communication operation from the power transfer signal thereby providing a more reliable and robust communication with reduced bit errors.

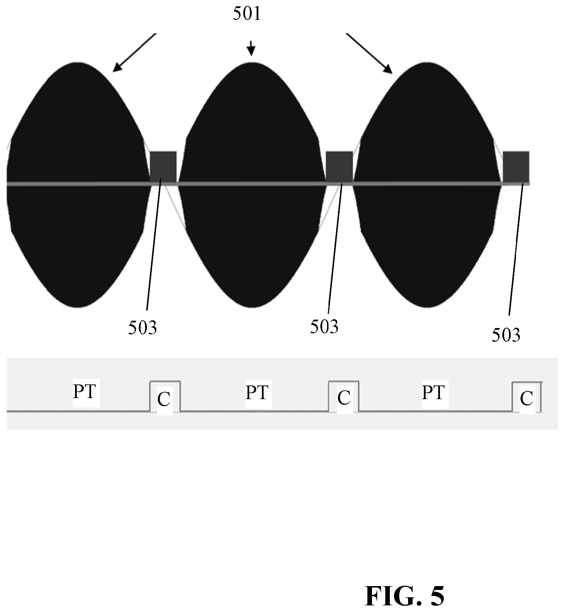

An example of how communication in communication time intervals of a repeating time frame could be performed is shown in FIG. 5 which shows the power transfer signal 501 being generated during the power transfer time intervals PT and the modulated communication carrier 503 signal being generated during the communication time intervals C. FIG. 5 implements the time division between power transfer and communication with each operation being performed in the dedicated time interval.

The communication carrier signal may in addition to the communication also provide for an auxiliary power provision from the power transmitter to the power receiver. The auxiliary power transfer/ path may provide a low power supply that may be used to supply internal circuitry such as a user interface or power receiver control functionality.

The communication carrier signal may accordingly be used to provide a second low level power transfer path from the power transmitter to the power receiver. To support this, the power receiver comprises a power extractor 311 which is arranged to extract power from the communication carrier signal. In the specific example, the power extractor 311 may accordingly extract power from the NFC carrier signal. The power extractor 311 is coupled to a load circuit 313 which may be provided by power extracted from the communication carrier signal by the power extractor 311. The load circuit 313 may typically be a control logic/ support function/ circuit of the power receiver, and/or may include a user interface of the power receiver. The load circuit 313 may for example include or consist in elements of the power receiver controller 301 and/or second communicator 307.

Thus, power may be provided from the power transmitter to the power receiver via communication carrier signal/ NFC carrier power harvesting. This may provide power to low power level, and e.g. low voltage voltage, electronics, such as the NFC hardware or a user interface. For example, for an NFC implementation, the extracted power may be up to around 200 mW.

The approach may thus for many practical applications allow a substantially reduced complexity and cost. For example, a power receiving device that includes a heating element as a load may directly be supplied by a power transfer signal directly inducting currents in the heating element. Indeed, in such an example, the described approach may in many cases allow a control and support circuitry as well as a user interface to be implemented and fully powered from the communication carrier signal, and specifically from an NFC carrier. Thus, the approach can in some cases allow a power receiving device to be designed that includes no electronic circuit powered by the power transfer signal. Thus, complex high voltage power extraction circuitry can be avoided completely.

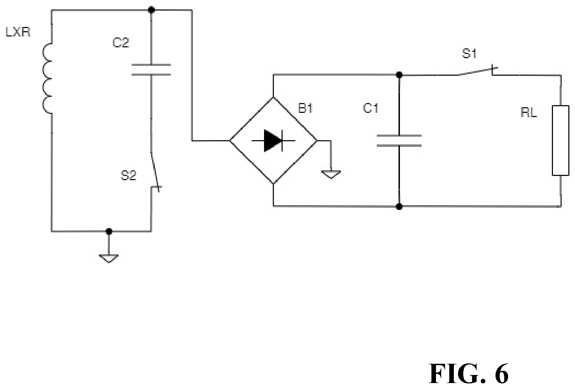

The power extractor 311 may be relatively simple and an example of power extracting circuitry/ power path is illustrated in FIG. 6.

FIG. 6 illustrates a circuit diagram of elements of an example of a power path of the power extractor 311. In the example, the second communication coil 309 is referred to by the designation LRX and when this is subjected to the communication carrier signal a corresponding AC voltage/ current is induced in the coil. The second communication coil 309 is coupled to a rectifier bridge B1 with a smoothing capacitor C1 coupled to the output of the bridge. Thus, a DC voltage is generated over the capacitor C1. The magnitude of the ripple on the DC voltage will depend on the size of the smoothing capacitor as well as on the load RL supplied by the power extractor 311.

The bridge B1 and smoothing capacitor C1 are coupled to a load RL via a switch S1 which can be used to switch on and off the power extraction/ harvesting. It will be appreciated that in many embodiments, the power extractor 311 may be directly and permanently coupled to the load RL with no switch being present. The load RL represents the load presented to the power extractor 311 by the load circuit 313.

FIG. 6 further illustrates a load modulation capacitor C2 which can be connected or disconnected in parallel to the second communication coil 309 based on the switching of switch S2. The second communicator 307 may during the communication time intervals control the switch S2 to provide the desired load modulation.

Thus, the power extractor 311 may be implemented by a low complexity and low cost circuit.

In order to provide a suitable communication carrier signal for extraction of power by the power receiver, the power transmitter includes a level controller 211 which is arranged to control the amplitude of the communication carrier signal.

The level controller 211 may be arranged to adapt the amplitude of the communication carrier signal in response to changes in the power extraction from the communication carrier signal and/or to differences in the inductive power path from the first communication coil 207 to the second communication coil 309. Specifically, the level controller 211 may be arranged to adapt the amplitude of the communication carrier signal, which henceforth will also be referred to as the communication amplitude, in response to changes in the amount of power being extracted and/or the coupling between the communication coils. For example, if the load increases such that more power is extracted (or is desired to be extracted) by the power extractor 311, the level controller 211 may be arranged to increase the communication amplitude. As another example, if the coupling factor increases, the communication amplitude may be reduced to compensate and provide a more consistent power supply signal.

The level controller 211 may specifically adapt/ change the communication amplitude to reduce variations in the power supply signal, e.g. as caused from changes in the coupling between the communication coils or in the power being extracted. It may in particular be arranged to result in reduced variation and a more stable/ constant voltage of the generated power supply signal.

In some embodiments, the level controller 211 may be dependent on measuring various parameters and adapting the communication amplitude in response. For example, in some embodiments, the coupling factor may continuously be measured/ estimated and when a change in coupling factor occurs, the level controller 211 may increase or decrease the amplitude to compensate for this change.

As another example, in some embodiments, the power receiver may be arranged to transmit a message to the power transmitter prior to any change in the extracted power from the communication carrier signal. The power receiver may for example indicate how much power/ load change is expected prior to performing the change. As a specific example, a user may perform an action to switch on a display that is powered from the power supply signal. Prior to switching on the display, the power receiver may transmit a message to the power transmitter indicating that the display is being switched on. In response to receiving this message, the level controller 211 may increase the communication amplitude. Indeed, in some embodiments, the communication amplitude may be increased to provide an additional power that causes the display to be turned on (e.g. the display may automatically come on when provided with sufficient power).

In some embodiments, the level controller 211 may implement a feed forward control where the communication amplitude is adapted based on a set of input parameters, such is in response to a coupling factor measurement and/or (expected) power extraction.

In many embodiments, the level controller 211 may be arranged to implement a feedback control loop. In many embodiments, the level controller 211 may be arranged to adapt the communication amplitude in response to values representing a property of the power supply signal, such as a voltage, current, or power level of the power supply signal.

Specifically, the level controller 211 may be arranged to form a power control loop with the power receiver by adjusting the amplitude of the communication carrier signal in response to the power level messages received from the power receiver.

In some embodiments, the power extractor 311 may regularly measure the voltage and/or power level of the power supply signal and the second communicator 307 may regularly, say every 200 msec, transmit power control messages to the first communicator 205. The first communicator 205 may provide these power control messages to the level controller 211 which may adapt the communication amplitude accordingly.

For example, the power level message may indicate a current value of the voltage and/or power of the power supply signal relative to the desired value (e.g. as a ratio or percentage). The level controller 211 may then adapt the communication amplitude to bias the power supply signal towards the desired value (e.g. if the voltage or power level is below the desired value, the communication amplitude may be increased and if the voltage or power level is below the desired value, the communication amplitude may be decreased.

In some embodiments, the power level messages may be transmitted in response to request messages being transmitted from the power transmitter to the power receiver. For example, if the specifications for a given wireless power transfer system does not mandate the power receiver to regularly transmit power level messages to the power transmitter, but do require the power receiver to respond to requests for power level messages transmitted from the power transmitter, the power transmitter may be arranged to regularly transmit such request messages thereby causing the power receiver to respond with power level messages.

Thus, in some embodiments, the power control loop messages may be managed from the power transmitter with this repeatedly transmitting power level message requests to the power receiver, and with this responding with suitable power control/ level messages.

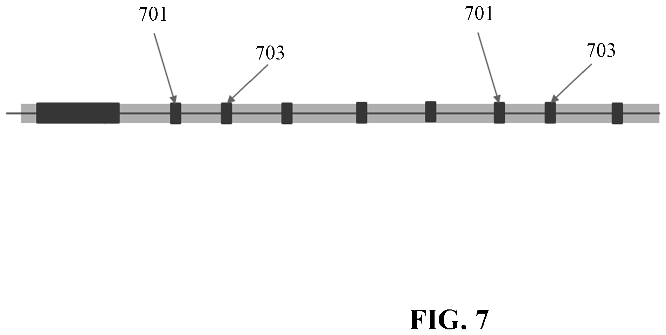

FIG. 7 illustrates an example where the power transmitter periodically transmits Request Power Level messages 701 to the power receiver and the power receiver in response transmits Power level messages 703. The communication of these messages is in both directions by modulation the communication carrier signal.

The power control loop may thus bias the power supply signal towards the desired value by adapting the communication amplitude.

During operation the power receiver may transmit a configuration message to the power transmitter that includes a response timing property indication which is indicative of a response timing property of a power supply signal resulting from power extraction from the communication carrier signal by the power receiver. The second communicator 307 may transmit the configuration message to the first communicator 205.

In the specific example where NFC is used for communication (and where the communication carrier signal is an NFC carrier), the configuration message may be an NDEF message.

The response timing property indication may be indicative of a timing property for changes in the power supply signal resulting from changes in the communication carrier signal, and specifically changes in the signal strength/ level/ amplitude/ field strength of the communication carrier signal.

The response timing property indication may for example indicate a value dependent on/ reflecting a rise time (for a given percentile), delay, time constant, or other timing change parameter for the power supply signal/ power extractor.

Thus, the response timing property indication may reflect the dynamic operation of the power extraction from the communication carrier signal. It may specifically indicate a speed of change of the power supply signal following from a change in the communication carrier signal.

In particular, the response timing property indication may be indicative of a step response timing property for the power supply signal. The step response timing property may reflect a timing parameter for a change of the power supply signal occurring as a response to/ result of a step change in the signal strength/ amplitude/ power level of the communication carrier signal.

The power transmitter of FIG. 1 and 2 comprises an adapter 213 which is arranged to adapt a control parameter of the power level control performed by the level controller 211. The adapter 213 is arranged to adapt the control parameter in response to the response timing property indication, i.e. the control parameter may be adapted based on the information provided by the power receiver relating to the dynamic performance of the power extraction to generate the power supply signal.

The control parameter is specifically a parameter that affects the control operation that the level controller 211 uses to control the amplitude of the communication carrier signal. Indeed, in some embodiments, the control parameter may be a parameter selecting between an adaptive control where the amplitude may be varied and a fixed control where the amplitude is controlled to be fixed.

The control parameter may specifically be a control parameter that affects the dynamic performance of the amplitude control performed by the level controller 211. The control loop parameter may specifically be a parameter that affects/ influences/ controls the dynamic performance, such as a speed of change of the amplitude, for the amplitude control.

In particular, when the level controller 211 implements a power control loop, the control parameter may specifically be a loop parameter. The loop parameter may be a variable parameter of the loop that can be set to change the (dynamic) response properties of the power control loop. In many embodiments, the loop parameter may be a variable parameter of the loop that can be set to change a timing property for the response of the power control loop.

The loop parameter may typically be a parameter influencing a dynamic behavior of the power control loop, such as a response time, a rise time, a frequency response, etc. The loop parameter may be a filter response (e.g. a frequency response property or an impulse response property), a gain, an integration constant, a response time constant etc.

The loop parameter may in many embodiments be a parameter that affects the stability of the power control loop. For example, the parameter may be a parameter that can be adjusted to ensure that the loop is (or remains) stable. In some embodiments, the loop parameter may be an integrator coefficient of PID (Proportional-Integral-Derivative) loop.

In the described approach the adapter 213 accordingly adapts control, and specifically a loop parameter, that may affect the dynamic behavior of the control of the amplitude of the communication carrier signal based on a response timing property indication received from the power receiver in a configuration message.

The approach may provide an improved performance and operation. It may allow an improved adaptation of the overall adaptation and control of the communication carrier signal to provide an improved auxiliary power transfer. The approach may allow the power receiver and power transmitter to interact to provide an improved overall dynamic performance. It may allow improved stability and accuracy of the amplitude control and the power control loop.

For example, the performance of the auxiliary power path tends to be heavily dependent on the coupling between the communication coils which may make the power control loop difficult to control and may e.g. result in difficulties in controlling the stability of the loop, oscillations, under- and overshoot performance, response times etc. The described approach may for example provide improved control that can reduce such issues and provide improved resilience to variations in the coupling factor. Other advantages include that the complexity of the power receiver may be reduced as a more stable or controlled signal can be induced thereby potentially avoiding the need for additional control and/or safety circuitry at the power receiver.

It will be appreciated that the exact adaptation of the control parameter and algorithm based on the response timing property indication will depend on the specific embodiment and the desired operation and performance.

In some embodiments, the adaptation may be to bias the loop towards stability and may specifically adapt the loop parameter to ensure that the resulting power control loop is stable. For example, depending on the response timing property indication, the gain of the control loop may be increased or decreased to ensure that the resulting loop is stable. For example, if the response timing property indication indicates a higher gain being implemented at the power receiver, the gain at the power transmitter may be reduced, and vice versa.

In many embodiments, the control parameter may be adapted to increase a speed of response for the response timing property indication being indicative of a reduced speed of response for the power receiver. Equivalently, the control parameter may be adapted to decrease a speed of response for the response timing property indication being indicative of an increased speed of response for the power receiver.

For example, in some embodiments, the adapter 213 may be arranged to receive a response timing property indication that indicates how fast the response time of the power receiver is. For example, the response timing property indication may indicate a time constant or rise time value for the circuitry of the power extractor 311. The adapter 213 may then be arranged to adapt a loop gain such that this is reduced for a faster response time, i.e. for a reduced time constant or rise time. For example, the adapter 213 may be arranged to determine the loop gain as a monotonically increasing function of the time constant and/or rise time as reported by the response timing property indication.

As another example, in some embodiments, the adapter 213 may be arranged to adapt a settling time, coefficients of PID controller.

In some embodiments where the power transmitter is arranged to repeatedly transmit power level message requests to the power receiver, the adapter 213 may be arranged adapt the frequency of transmission of the power level message requests in response to the response timing property indication. For example, depending on the response timing property indication indicating a faster or slower response of the power receiver, the adapter 213 may adjust the frequency of transmitting power level message requests. A power control loop may be implemented by the power transmitter transmitting power level message requests and the power receiver being arranged to respond by providing a power level message, e.g. indicating a current level, a level error, or a desired change. Depending on the response timing property indication, the adapter 213 may adapt the interval between the power level message requests so that these are transmitted more or less frequently. The power receiver will respond to each message as received and the approach may be used to adapt the update rate/ reporting rate of the system. This may adapt the dynamic performance of the loop and may allow improved operation.

In many embodiments, the power transmitter may be arranged to operate in four different phases/ modes.

A first phase is an idle phase. In this phase no power receiver is detected to be present by the power transmitter. During the idle phase, no power transfer signal is generated and no communication carrier signal is generated. In the idle phase, the power transmitter monitors for the presence of a power receiver. In particular, the power transmitter may at regular intervals generate an electromagnetic detection signal and if a load of this signal is detected, the power transmitter may consider that a power receiver is potentially present. When a power receiver is detected, the power transmitter may transition to a configuration phase.

In the configuration phase, configuration information/ data may be exchanged between the power transmitter and the power receiver. The configuration information/ data may provide information of properties of the power receiver and power transmitter to the complementary device. Each device may adapt an operational parameter based on the exchanged configuration data. Thus, the configuration phase may be used by the power transmitter and the power receiver to exchange specific information on the characteristics of the specific devices thereby allowing them to adapt the operation to the specific pairing of power transmitter and power receiver.

If the configuration phase is not successful, such as e.g. if the power transmitter does not receive suitable messages from the power receiver or an explicit termination is received, the power transmitter may return to the idle phase.

If the configuration and communication conclude successfully, the power transmitter proceeds to a connected phase. In the connected phase, the power transmitter and power receiver have established a communication and the devices may be adapted to each other. However, power transfer has not been initialized. During the connected phase, the communication carrier signal is generated and it may specifically be continuously present during the connected phase. However, during the connected phase, no power transfer signal is generated. Further, during the connected phase, foreign object detection may be performed. Further, communication may be performed between the power transmitter and the power receiver. The power receiver may in many cases be arranged to extract power from the communication carrier signal (e.g. to power the internal functionality of the power receiver) during the connected phase.

The connected phase may in many scenarios be continued for a substantial time, including for hours or longer. For example, if a kitchen device, e.g. a blender, comprising a wireless power receiver as described is positioned on a worktop comprising a power transmitter as described, they may go through the configuration phase and thus enter the connected phase in an adapted and connected mode. The devices may then remain in this condition for a long time corresponding to the device, e.g. the blender, remaining on the worktop ready for being activated but not actually being switched on.

In response to a detection of a suitable event, the power transmitter and power receiver may transition from the connected phase to the power transfer phase. The event may typically be detected by the power receiver which may transmit a message to the power transmitter to request that the power transfer phase is entered. For example, if the user performs a suitable user action, such as pressing an on button, the power receiver may in response proceed to transmit a request to the power transmitter to request that the power transfer phase is entered.

The power transmitter (and the power receiver) may then proceed to transition to the power transfer.

In the power transfer phase, the power transmitter generates a power transfer drive signal and accordingly a power transfer signal. In the power transfer phase, power is provided/ transferred to the power receiver by the power transfer signal. As described previously, the power transfer signal may use a repeating time frame where the power transfer signal is provided in power transfer time intervals and with the repeating time frame also comprising communication time intervals and/or foreign object detection time intervals. During the power transfer phase, the communication carrier signal may also be generated when communication is performed during the communication time intervals.

Upon termination of the power transfer, the power transmitter and the power receiver may return to the idle phase or the connected phase depending on the specific cause of the termination (e.g. if the device is switched off, the power transmitter may return to the connected phase and if it is removed the power transmitter may return to the idle phase).

The configuration and the connected phases may together be referred to as initialization phases.

In the power transmitter of FIG. 2, the power transmitter controller 203 is arranged to control the power transmitter to operate in and transition between the phases described above.

In some embodiments, the configuration message may be transmitted during the configuration phase and the power level control may be adapted during this phase and applied during the connected phase, and/or possibly during the power transfer phase. In some embodiments, the configuration message may alternatively or additionally transmit a configuration message during the connected phase and/or the power transfer phase.

In some embodiments, the power extractor 311 may be arranged to only extract power from the communication carrier signal during the connected phase (and possibly the configuration and/or idle phase). Specifically, in some embodiments, the power extractor 311 may be arranged to extract power during the connected phase where no power transfer signal is generated by the power transmitter. However, it may switch to extract power from the power transfer signal during the power transfer phase where the power transfer signal is generated. Internal circuitry may thus in some embodiments be powered by the communication carrier signal during the connected phase and by the power transfer signal during the power transfer phase. In some embodiments, the power extractor 311 may be arranged to generate the power supply signal providing power to a circuit by extracting power from the communication carrier signal during a connected phase and by extracting power from the power transfer signal during the power transfer phase.

In many embodiments, the control of the communication drive signal and communication carrier signal may be different in the connected phase and in the power transfer phase, and in particular the power control loop may be arranged to operate differently in the connected phase and in the power transfer phase.

In some embodiments, the adapter 213 may be arranged to adapt the operation of the power control, and specifically the power control loop, in response to the response timing property indication while in the connected phase, but not while in the power transfer phase.

For example, in some embodiments, the level controller 211 may be arranged to perform power control for the communication drive signal/ communication carrier signal while in the connected phase. The power receiver may during the connected phase transmit power level messages (which specifically may be power error messages or absolute power level messages) and the level controller 211 may adapt the amplitude of the communication drive signal and thus the communication carrier signal in response to these messages. During the connected phase, the power extractor 311 may extract power and the power supply signal may via the power control loop be controlled to e.g. provide a desired voltage.

However, during the power transfer phase, the power control, and specifically the power control loop may be arranged to operate differently, such as e.g. in a standard or default operation mode that is not dependent on the response timing property indication. Indeed, in some embodiments, the power control, and specifically the power control loop, may not be operated during the power transfer phase.

In some embodiments, the level controller 211 may be arranged to set the amplitude of the communication carrier signal to a constant value for the power transfer phase. Thus, whereas the communication amplitude may be controlled during the connected phase thereby improving power transfer, the operation during the power transfer phase (where power may be provided to the circuit via the power transfer signal) is changed allowing reduced communication, reduced complexity of operation, and e.g. possibly improved communication as a constant communication carrier signal may be provided.

In some embodiments, the level controller 211 is arranged to not adapt the power level control during the power transfer phase.

In some embodiments, the configuration message may indicate one out of a plurality of predetermined response timing property indications.

In some embodiments, a plurality of different settings for the response timing property may be predetermined, and e.g. specified in the Technical Specifications for the wireless power transfer system. In some embodiments, the predetermined different settings may include only two settings, such as for example a fast and slow setting (e.g. corresponding to two different capacitors and/or power settings).

In other embodiments, the predetermined different settings may include a relatively large number of predetermined settings, such as for example a number of different time constants or rise times. In such embodiments, the configuration message may indicate one of the predetermined settings/ predetermined response timing values, and the adapter 213 may be arranged to adapt the loop parameter/ response in response to this value.

Such an approach may provide an efficient communication and may allow the response timing property indication to be very efficiently coded, including e.g. in some embodiments being only a single bit. It may in many cases for example also facilitate and reduce complexity of the operation of the power transmitter or power receiver. For example, the power transmitter may be designed with a few different loop filters corresponding to the specific possible settings and may simply select the appropriate loop filter for the received response timing property indication. Similarly, it may facilitate operation at the power receiver if this merely needs to indicate a predetermined property.

In some embodiments, only one configuration message is transmitted from the power receiver to the power transmitter. For example, in some embodiments, the power receiver may be arranged to transmit a configuration message once during the configuration phase when the power transmitter and power receiver first detect the presence of each other. It may further be arranged to not transmit any configuration message during the connected phase or during the power transfer phase. Thus, in some embodiments, the response timing property indication is provided only once upon initialization of contact/ connection between the power transmitter and power receiver. The level controller 211, and specifically the power loop dynamic performance, may be configured once when the pairing between the power receiver and power transmitter is established.

Such an approach may reduce complexity and resource demand, yet may in many scenarios provide an advantageous adaptation of the power control operation.

However, in other embodiments, the power receiver may be arranged to send more than one configuration message and more than one response timing property indication. Additional configuration messages may e.g. be transmitted during the connected phase and/or the power transfer phase.

In some embodiments, the power receiver may for example be arranged to transmit a new configuration message at regular/ periodic intervals. For example, during the connected phase, a new configuration message may be transmitted every, say, minute to provide a new response timing property indication thereby keeping the power control loop accurate and updated.

In some embodiments, the power receiver may in particular be arranged to transmit a new configuration message and response timing property indication in response to a detection of a change in the power provision timing of the power receiver. For example, if the power receiver can switch between two different values of smoothing capacitor, the power receiver may be arranged to transmit a response timing property indication whenever the smoothing capacitor is switched.

In some embodiments, a new configuration message with a new response timing property indication is transmitted by the power receiver in response to a detection that the power level of the power being extracted from the communication carrier signal changes.

For example, if the power extractor 311 detects that the power extracted from the power supply signal changes, e.g. by measuring the current drawn from the power supply signal, it may inform the second communicator 307 which may proceed to generate and transmit a new configuration message indicating the change.

In some embodiments, the response timing property indication may simply indicate that a change has occurred (e.g. if only two modes, such as high power consumption and low power consumption, are supported). In other embodiments, more detailed information may be provided such as for example the response timing property indication providing an indication of the specific power consumption level.

In response to receiving the configuration message, the power transmitter may proceed to change the power control and specifically the power control loop dynamic performance as previously described.

In some cases, the configuration message transmitted in response to the detected change may be the first configuration message/ response timing property indication transmitted from the power receiver to the power transmitter. For example, the power transmitter may start up with a nominal setting which corresponds to a nominal power level, such as for example a low power level. The power receiver may be arranged to not exceed this nominal power level by more than a given margin. As long as the power extraction remains below the threshold level, no response timing property indication is transmitted. However, if it is detected that the power level increases above the threshold, the power receiver may transmit a configuration message with a response timing property indication causing the power transmitter to adapt accordingly.

In some embodiments, the power receiver may be arranged to transmit the configuration message when it considers it appropriate. For example, the power receiver may be arranged to transmit a configuration message with a response timing property indication when it is considered appropriate or required. For example, in some embodiments, the power receiver may transmit the configuration message upon entering, or at a predetermined time within, the configuration phase. In other embodiments, the power receiver may e.g. decide to transmit a configuration message in response to a change being detected, such as a change in the power being extracted from the communication carrier signal. Thus, it may send a new configuration message when it is considered that a significant change has occurred in the response behavior of the power receiver.

Alternatively or additionally, the power receiver may be arranged to respond with a configuration message comprising a response timing property indication in response to receiving a configuration request message from the power transmitter. Thus, in some embodiments, the power transmitter may at suitable times transmit a configuration request message to the power receiver and in response the power receiver may transmit a new configuration message providing a new response timing property indication.

Thus, in some embodiments, the power transmitter may control when response timing property information is provided to the power transmitter. This may be beneficial in many scenarios and embodiments and may provide improved performance. It may for example allow the power receiver to control how fast the update rate of the control loop performance is. In some embodiments, the configuration request message may indicate preferred or required properties of the response. For example, if the response timing property indications are used to indicate one out of a set of predetermined values, the configuration request message may for example indicate the predetermined values that can be selected between.

In some embodiments, the response timing property of the power extraction may be e.g. a fixed or predetermined value for the specific power receiver, such as e.g. an indication of the smoothing capacitor value. In other embodiments, the response timing property indication may for example be determined in response to a measured value at the power receiver, such as a current or power drawn from the power supply signal.

In some embodiments, the power transmitter and power receiver may be arranged to interwork to determine a response timing property.

In particular, the communication driver 209 may be arranged to apply a change in amplitude of the communication carrier signal. The amplitude change will result in a change to the signal induced in the second communication coil 309 and thus a change in the power supply signal. For example, the voltage of the power supply may change as a result of the amplitude change. However, there will typically be a delay in the response and the change in the power supply signal will not directly follow the change in the communication amplitude. The power extractor 311 may measure properties of the change in the power supply signal and generate a response timing property indication to reflect the change. This response timing property indication may then be transmitted to the power transmitter in a configuration message and used to update the power control loop.

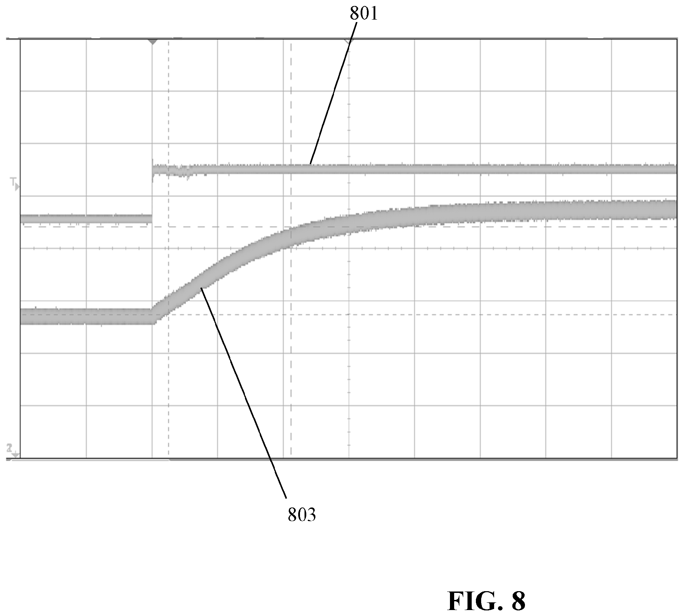

FIG. 8 shows an example where a step change is applied to the communication drive signal/ power transfer signal 801. The resulting change in the power supply signal 803 (e.g. generated by a circuit corresponding to FIG. 6) is also illustrated in FIG. 8. The power extractor 311 may for example measure a timing property, such as a change gradient, rise time value, time to 90% of the final value etc. The timing property may be provided to the second communicator 307 and transmitted to the power transmitter in a suitable configuration message.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

*Generally, examples of the approach are indicated by below embodiments.*

### EMBODIMENTS:

*1. A power transmitter (101) for wirelessly providing power to a power receiver (105) via an inductive power transfer signal, the power transmitter (101) comprising:*
   *a power transfer coil (103) arranged to generate the power transfer signal;*
   *a power transfer driver (201) arranged to generate a power transfer drive signal for the power transfer coil (103), the power transfer driver (201) being arranged to, during a power transfer phase, generate the power transfer drive signal;*
   *a communication coil (207) arranged to generate a communication carrier signal;*
   *a communication driver (209) arranged to generate a communication drive signal for the communication coil to generate the communication carrier signal;*
   *a communication unit (205) arranged to communicate with the power receiver (105) using modulation of the communication carrier signal;*
      *wherein the communication unit (205) is arranged to receive a configuration message from the power receiver (105), the configuration message comprising a response timing property indication indicative of a response timing property for a power supply signal resulting from power extraction from the communication carrier signal by the power receiver (105);*
   *a level controller (211) arranged to control an amplitude of the communication carrier signal; and*
   *an adapter (213) arranged to adapt a control parameter of the power level controller.*
*2. The power transmitter (101) of 1 wherein the communication unit (205) is arranged to receive power level messages from the power receiver (105); and wherein the level controller (211) is arranged to form a power control loop with the power receiver (105) by adjusting the amplitude of the communication carrier signal in response to the power level messages.*
*3. The power transmitter (101) of 2 wherein the control parameter is a loop parameter for the power control loop.*
*4. The power transmitter (101) of any 2 or 3 further comprising a phase controller (203) arranged to switch the power transmitter (101) from a connected phase to the power transfer phase when initiating a power transfer; and wherein the power transfer driver (201) is arranged to generate the power transfer signal when in the power transfer phase but not when in the connected phase and the communication driver (209) is arranged to generate the communication carrier signal to be present during the connected phase; and wherein the level controller (211) is arranged to adjust the amplitude of the communication carrier signal in response to the power level messages during the connected phase.*
*5. The power transmitter (101) of any of 2-4 wherein the level controller (211) is arranged to set a power level of the communication carrier signal to a constant value for the power transfer phase.*
*6. The power transmitter (101) of any of 1-5 wherein the response delay property indication is indicative of a step response timing property for the power supply signal.*
*7. The power transmitter (101) of any of 1-6 further comprising a phase controller (203) arranged to switch the power transmitter (101) from a connected phase to the power transfer phase when initiating a power transfer; and wherein the power transfer driver (201) is arranged to generate the power transfer signal when in the power transfer phase but not when in the connected phase and the communication driver (209) is arranged to generate the communication carrier signal to be present during the connected phase; and wherein the communication unit (205) is arranged to receive the configuration message prior to switching to the power transfer phase.*
*8. The power transmitter (101) of any of 1-7 wherein the communication unit (205) is arranged to repeatedly transmit power level message requests to the power receiver (105); and wherein the adapter (213) is arranged to adapt the power level control operation by adapting a frequency of transmission of the power level requests in response to the response delay property indication.*
*9. The power transmitter (101) of any of 1-8 wherein the communication unit (205) is arranged to transmit a configuration request message to the power receiver (105), the configuration request message being a request for the power receiver (105) to transmit the configuration message.*
*10. The power transmitter (101) of any of 1-9 wherein the configuration message is indicative of one predetermined response delay property indication out of a set of predetermined response delay property indications.*
*11. A power receiver (105) for wirelessly receiving power from a power transmitter (101) via an electromagnetic power transfer signal, the power receiver (105) comprising:*
   *an inductive power extraction element (107) arranged to extract power from the power transfer signal during a power transfer phase;*
   *a communication coil (309) for receiving a received communication carrier signal,*
   *a communication unit (307) arranged to communicate with the power transmitter (101) using modulation of the communication carrier signal;*
   *a power extractor (311) coupled to the communication coil (309) and arranged to extract a power supply signal from the communication coil (309) and to supply a circuit (313) of the power receiver (105) by the power supply signal;*
   *wherein the communication unit (307) is further arranged to transmit a configuration message to the power transmitter (101), the configuration message comprising a response timing property indication indicative of a response timing property of the power supply signal.*
*12. The power receiver (105) of 11 wherein the power extractor (311) is arranged to detect a change in power extracted from the power supply signal by the circuit (313); and the communication unit (307) is arranged to transmit the configuration message in response to detecting the change in power extracted from the power supply signal.*
*13. A wireless power transfer system comprising a power transmitter (101) in accordance with 1 - 10 and a power receiver (105) in accordance with 11 or 12.*
*14. The wireless power transfer system of 13 wherein the communication driver (209) is arranged to generate a change in amplitude of the communication drive signal, and the power receiver (105) is arranged to determine the response delay property in response to a change in the supply signal following the change in the amplitude of the communication drive signal.*
*15. A method of operation for a power transmitter (101) wirelessly providing power to a power receiver (105) via an inductive power transfer signal, the method comprising:*
   *a power transfer coil (103) generating the power transfer signal;*
   *generating a power transfer drive signal for the power transfer coil (103) during a power transfer phase;*
   *a communication coil (207) generating a communication carrier signal;*
   *generating a communication drive signal for the communication coil to generate the communication carrier signal;*
   *communicating with the power receiver (105) using modulation of the communication carrier signal;*
   *receiving a configuration message from the power receiver (105), the configuration message comprising a response timing property indication indicative of a response timing property of a power supply signal resulting from power extraction from the communication carrier signal by the power receiver (105);*
   *controlling an amplitude of the communication carrier signal; and*
   *adapting a control parameter of the level controller (211).*
*16. A method of operation for a power receiver (105) wirelessly receiving power from a power transmitter (101) via an electromagnetic power transfer signal, the power receiver (105) comprising:*
   *an inductive power extraction element (107) extracting power from the power transfer signal during power transfer time intervals of a power transfer phase;*
   *a communication coil (309) receiving a received communication carrier signal,*
   *communicating with the power transmitter (101) using modulation of the communication carrier signal;*
   *extracting a power supply signal from the communication coil (309);*
   *supplying a circuit of the power receiver (105) by the power supply signal; and*
   *transmitting a configuration message to the power transmitter (101), the configuration message comprising a response delay property indication indicative of a response delay property of the power supply signal.*

More specifically, the invention is defined by the appended CLAIMS.

## Claims

1. A power transmitter (101) for wirelessly providing power to a power receiver (105) via an inductive power transfer signal, the power transmitter (101) comprising:
a power transfer coil (103) arranged to generate the power transfer signal;
a power transfer driver (201) arranged to generate a power transfer drive signal for the power transfer coil (103), the power transfer driver (201) being arranged to, during a power transfer phase, generate the power transfer drive signal;
a communication coil (207) arranged to generate a communication carrier signal;
a communication driver (209) arranged to generate a communication drive signal for the communication coil to generate the communication carrier signal;
a communication unit (205) arranged to communicate with the power receiver (105) using modulation of the communication carrier signal, wherein the communication is Near Field Communication (NFC);
wherein the communication unit (205) is arranged to receive a configuration message from the power receiver (105), the configuration message comprising a response timing property indication indicative of a response timing property for a power supply signal being extracted from the communication carrier signal by the power receiver (105), the response timing property being indicative of a speed of change in the power supply signal resulting from changes in the communication carrier signal;
a level controller (211) arranged to control an amplitude of the communication carrier signal; and
an adapter (213) arranged to adapt a control parameter for the control of the amplitude of the communication carrier signal by the level controller (211).

2. The power transmitter (101) of claim 1 wherein the communication unit (205) is arranged to receive power level messages from the power receiver (105); and wherein the level controller (211) is arranged to form a power control loop with the power receiver (105) by adjusting the amplitude of the communication carrier signal in response to the power level messages.

3. The power transmitter (101) of claim 2 wherein the control parameter is a loop parameter for the power control loop.

4. The power transmitter (101) of claim 2 or 3 further comprising a phase controller (203) arranged to switch the power transmitter (101) from a connected phase to the power transfer phase when initiating a power transfer; and wherein the power transfer driver (201) is arranged to generate the power transfer signal when in the power transfer phase but not when in the connected phase and the communication driver (209) is arranged to generate the communication carrier signal to be present during the connected phase; and wherein the level controller (211) is arranged to adjust the amplitude of the communication carrier signal in response to the power level messages during the connected phase.

5. The power transmitter (101) of any of claims 2-4 wherein the level controller (211) is arranged to set a power level of the communication carrier signal to a constant value for the power transfer phase.

6. The power transmitter (101) of any previous claim wherein the response timing property indication is indicative of a step response timing property for the power supply signal.

7. The power transmitter (101) of any previous claim further comprising a phase controller (203) arranged to switch the power transmitter (101) from a connected phase to the power transfer phase when initiating a power transfer; and wherein the power transfer driver (201) is arranged to generate the power transfer signal when in the power transfer phase but not when in the connected phase and the communication driver (209) is arranged to generate the communication carrier signal to be present during the connected phase; and wherein the communication unit (205) is arranged to receive the configuration message prior to switching to the power transfer phase.

8. The power transmitter (101) of any previous claim wherein the communication unit (205) is arranged to repeatedly transmit power level message requests to the power receiver (105); and wherein the adapter (213) is arranged to adapt the power level control operation by adapting a frequency of transmission of the power level requests in response to the response timing property indication.

9. The power transmitter (101) of any previous claim wherein the communication unit (205) is arranged to transmit a configuration request message to the power receiver (105), the configuration request message being a request for the power receiver (105) to transmit the configuration message.

10. The power transmitter (101) of any previous claim wherein the configuration message is indicative of one predetermined response timing property indication out of a set of predetermined response timing property indications.

11. A power receiver (105) for wirelessly receiving power from a power transmitter (101) via an electromagnetic power transfer signal, the power receiver (105) comprising:
an inductive power extraction element (107) arranged to extract power from the power transfer signal during a power transfer phase;
a communication coil (309) for receiving a received communication carrier signal,
a communication unit (307) arranged to communicate with the power transmitter (101) using modulation of the communication carrier signal, wherein the communication is Near Field Communication (NFC);
a power extractor (311) coupled to the communication coil (309) and arranged to extract a power supply signal from the communication coil (309) and to supply a circuit (313) of the power receiver (105) by the power supply signal;
wherein the communication unit (307) is further arranged to transmit a configuration message to the power transmitter (101), the configuration message comprising a response timing property indication indicative of a response timing property of the power supply signal, the response timing property being indicative of a speed of change in the power supply signal resulting from changes in the communication carrier signal.

12. The power receiver (105) of claim 11 wherein the power extractor (311) is arranged to detect a change in power extracted from the power supply signal by the circuit (313); and the communication unit (307) is arranged to transmit the configuration message in response to detecting the change in power extracted from the power supply signal.

13. A wireless power transfer system comprising a power transmitter (101) in accordance with any of claims 1 - 10 and a power receiver (105) in accordance with claim 11 or 12.

14. A method of operation for a power transmitter (101) wirelessly providing power to a power receiver (105) via an inductive power transfer signal, the method comprising:
a power transfer coil (103) generating the power transfer signal;
generating a power transfer drive signal for the power transfer coil (103) during a power transfer phase;
a communication coil (207) generating a communication carrier signal;
generating a communication drive signal for the communication coil to generate the communication carrier signal;
communicating with the power receiver (105) using modulation of the communication carrier signal, wherein the communication is Near Field Communication (NFC);
receiving a configuration message from the power receiver (105), the configuration message comprising a response timing property indication indicative of a response timing property of a power supply signal being extracted from the communication carrier signal by the power receiver (105) , the response timing property being indicative of a speed of change in the power supply signal resulting from changes in the communication carrier signal;
controlling an amplitude of the communication carrier signal; and
adapting a control parameter for the control of the amplitude of the communication carrier signal.

15. A method of operation for a power receiver (105) wirelessly receiving power from a power transmitter (101) via an electromagnetic power transfer signal, the power receiver (105) comprising:
an inductive power extraction element (107) extracting power from the power transfer signal during power transfer time intervals of a power transfer phase;
a communication coil (309) receiving a received communication carrier signal,
communicating with the power transmitter (101) using modulation of the communication carrier signal, wherein the communication is Near Field Communication (NFC);
extracting a power supply signal from the communication coil (309);
supplying a circuit of the power receiver (105) by the power supply signal; and
transmitting a configuration message to the power transmitter (101), the configuration message comprising a response timing property indication indicative of a response timing property of the power supply signal, the response timing property being indicative of a speed of change in the power supply signal resulting from changes in the communication carrier signal.
